# EUROPÄISCHE PATENTANMELDUNG

(11) **EP 2 502 598 A1**
(43) Veröffentlichungstag der Anmeldung: **26.09.2012**
(21) Anmeldenummer: 12001979.9
(22) Anmeldetag: 21.03.2012
(51) Int. Cl.: A61C 3/025, B24C 7/00

(54) **Dentalstrahlgerätevorrichtung mit einem Druckluftversorgungssystem**

(30) Priorität: 22.03.2011 DE 102011014764
(71) Anmelder: Renfert GmbH, 78247 Hilzingen (DE)
(72) Erfinder: Bertiller, Marco, 78351 Bodman-Ludwigshafen (DE)
(74) Vertreter: Daub, Thomas

(57) **Zusammenfassung**

Die Erfindung geht aus von einer Dentalstrahlgerätevorrichtung mit einem Druckluftversorgungssystem (19), das zumindest ein erstes Schaltventil (27) aufweist, das für einen Betrieb von einem Bediener betätigbar ist.

Es wird vorgeschlagen, dass die Dentalstrahlgerdtevorrichtung zumindest ein zweites Schaltventil (40') aufweist, das wirkungsmäßig mit dem von dem Bediener betätigbaren ersten Schaltventil (27) verbunden ist.

## Beschreibung

### Stand der Technik

Die Erfindung betrifft ein Dentalstrahlgerät nach dem Oberbegriff des Anspruchs 1.

### Vorteile der Erfindung

Die Erfindung geht aus von einer Dentalstrahlgerätevorrichtung mit einem Druckluftversorgungssystem, das zumindest ein erstes Schaltventil aufweist, das für einen Betrieb von einem Bediener betätigbar ist.

Erfindungsgemäß wird gemäß Anspruch 1 vorgeschlagen, dass die Dentalstrahlgerätevorrichtung ein zweites Schaltventil aufweist, das wirkungsmäßig mit dem von dem Bediener betätigbaren Schaltventil verbunden ist. Dadurch kann ein Teil des Druckluftversorgungssystems in einem deaktivierten Betriebszustand gasdicht abgeschlossen werden, wodurch zum einen verhindert werden kann, dass sich in diesem Bereich ein Staudruck aufgrund eines weiter anliegenden Eingangsdrucks bildet, zum anderen kann verhindert werden, dass in diesem Teil des Druckluftversorgungssystems ein Druck auf einen Umgebungsdruck abfällt. Dadurch können unvorteilhafte Druckstöße, wie sie insbesondere nach einem kurzzeitigen Abschalten eines die Dentalstrahlgerätevorrichtung aufweisenden Dentalstrahlgeräts auftreten können, vermieden werden, wodurch eine Handhabung des Dentalstrahlgeräts insbesondere in einer Zeitspanne kurz nach einem in Betrieb nehmen vorteilhaft verbessert werden kann. Weitere vorteilhafte Ausgestaltungen ergeben sich aus den Unteransprüchen.

Unter einem "von einem Bediener betätigbaren Schaltventil" soll dabei insbesondere ein Schaltventil verstanden werden, das mit zumindest einem Bedienelement verbunden ist, das zum Öffnen und/oder Schließen des Schaltventils vorgesehen ist. Unter einem "Bedienelement" soll dabei insbesondere ein Fußpedal verstanden werden. Grundsätzlich sind aber auch andere Bedienelemente, wie insbesondere ein Handschalter, denkbar. Unter "wirkungsmäßig verbunden" soll weiter insbesondere verstanden werden, dass eine Betätigung des ersten Schaltventils mittels des Bedienelements automatisch zu einer zeitversetzten Betätigung des zweiten Schaltventils führt. Die zumindest zwei Schaltventile können dabei grundsätzlich hydraulisch, pneumatisch, mechanisch und/oder elektrisch wirkungsmäßig verbunden sein. Unter einem "Betrieb" soll weiter insbesondere verstanden werden, dass die zumindest zwei Schaltventile für eine Abgabe eines Strahlmittels geöffnet sind. Unter einem Bauteil, das "strömungstechnisch zwischen" zwei weiteren Bauteilen angeordnet ist, soll insbesondere verstanden werden, dass in zumindest einem Betriebszustand ein Betriebsmittelmedium, wie insbesondere eine Druckluft, das von einem der weiteren Bauteile zu dem anderen der weiteren Bauteile strömt, durch das strömungstechnisch zwischen diesen Bauteilen angeordnete Bauteil strömt. Unter zwei Bauteilen, die "strömungstechnisch miteinander verbunden" sind, soll insbesondere verstanden werden, dass in zumindest einem Betriebszustand das Betriebsmittelmedium von dem einen Bauteil zu dem anderen Bauteil strömt. Dabei können grundsätzlich noch weitere Bauteile zwischen den zumindest zwei strömungstechnisch miteinander verbundenen Bauteilen angeordnet sein. Weiter soll unter einem "Druckregler" ein von einem Bediener einstellbares Druckregelventil verstanden werden, dass dazu vorgesehen ist, einen statischen Druck und/oder einen dynamischen Betriebsdruck auf einen von dem Bediener vorgesehenen Wert einzustellen. Unter einem "statischen Druck" soll insbesondere ein Druck verstanden werden, der bei ruhendem Betriebsmittelmedium herrscht. Unter einem "dynamischen Betriebsdruck" soll insbesondere ein Druck verstanden werden, der bei strömendem Betriebsmittelmedium herrscht. Unter einem "Eingang" soll insbesondere ein Teil eines Bauteils verstanden werden, durch das in einem normalen, fehlerfreien Betrieb das Betriebsmittelmedium in das Bauteil einströmt. Unter einem "Ausgang" soll insbesondere ein Teil eines Bauteils verstanden werden, durch das in einem normalen, fehlerfreien Betrieb das Betriebsmittelmedium aus dem Bauteil heraus strömt..Unter "vorgesehen" soll insbesondere speziell ausgestattet und/oder ausgelegt verstanden werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Darstellung eines Dentalstrahlgeräts mit einer erfindungsgemäßen Dentalstrahlgerätevorrichtung,
- Fig. 2: ein Druckluftversorgungssystem der Dentalstrahlgerätevorrichtung und
- Fig. 3: einen Ausschnitt aus dem Druckluftversorgungssystem aus Fig. 2.

### Beschreibung der Ausführungsbeispiele

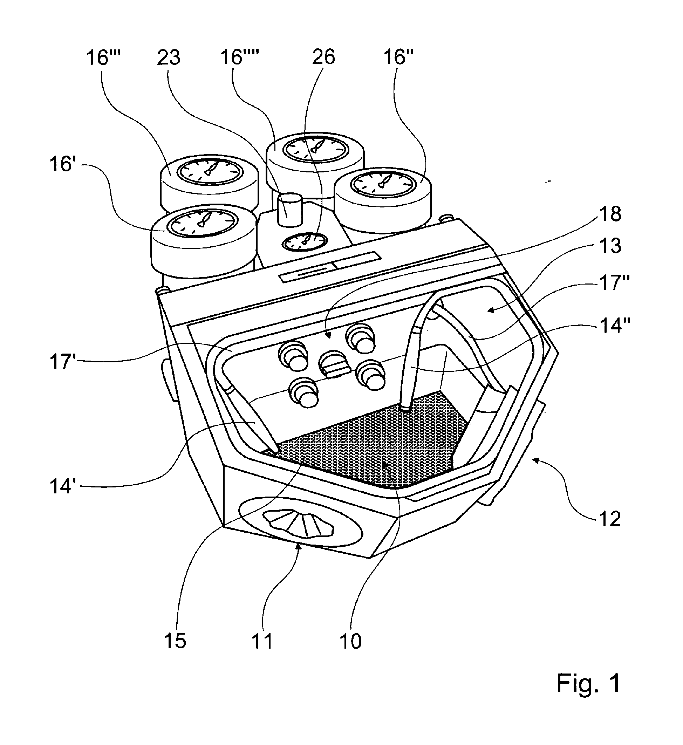

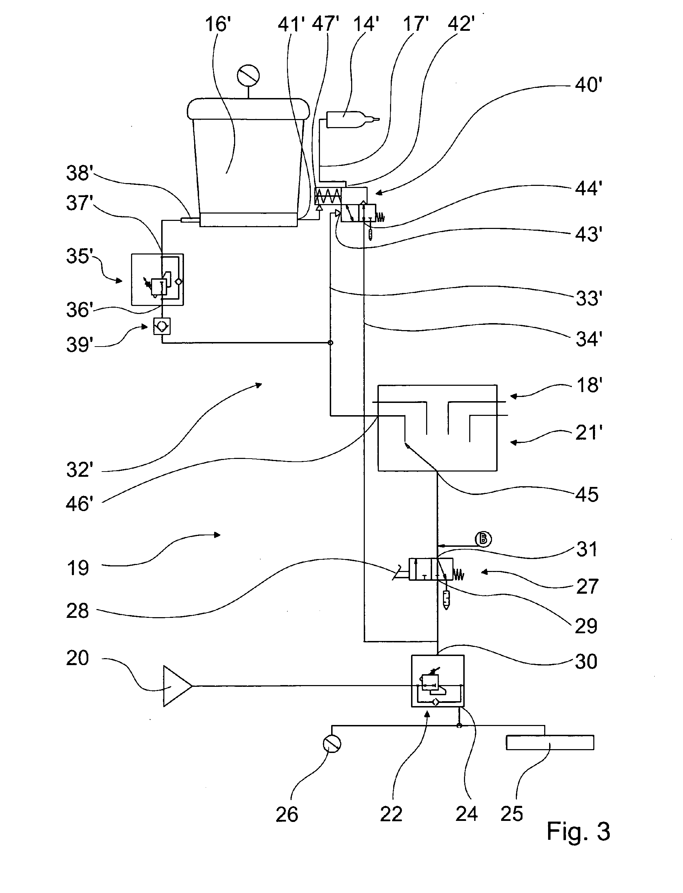

Die Figuren 1 bis 3 zeigen ein Dentalstrahlgerät zur Bearbeitung von Dentalprodukten. Das Dentalstrahlgerät ist für eine Bearbeitung der Dentalprodukte mit Strahlgut vorgesehen. Das Dentalstrahlgerät arbeitet dabei nach einem Sandstrahlprinzip, bei dem das Strahlgut durch Druckluft beschleunigt wird und beim Auftreffen auf das Dentalprodukt Abtragungen an dessen Oberfläche bewirkt.

Das Dentalstrahlgerät umfasst eine Bearbeitungskammer 10, die seitlich zwei Eingriffausnehmungen 11, 12 für einen Bediener des Dentalstrahlgeräts aufweist. Die Bearbeitungskammer 10 weist eine sechseckige Kontur auf und ist in einem oberen Bereich mittels eines transparenten Deckels 1 3 verschlossen. Der Deckel 1 3 der Bearbeitungskammer 10 liegt in einem geschlossenen Zustand auf einem Dichtungselement der Bearbeitungskammer 10 auf. Innerhalb der Bearbeitungskammer 10 sind Bearbeitungswerkzeuge 14', 14", 14"', 14"" angeordnet. Ein Boden 15 der Bearbeitungskammer 10 weist ein Kunststoffgitter auf. Das Kunststoffgitter liegt lose auf. In einem Betrieb kann Strahlgut somit durch das Kunststoffgitter aus einem Bearbeitungsbereich in der Bearbeitungskammer 10 nach unten durchfallen und wird von dem Boden 15 aufgefangen (vgl. Figur 1).

In einem den Eingriffausnehmungen 11,12 abgewandten Bereich der Bearbeitungskammer 10 des Dentalstrahlgeräts sind vier im Wesentlichen identisch ausgeführte Strahlguttankeinheiten 16', 16", 16"', 16"" angeordnet. Die Strahlguttankeinheiten 16', 16", 16"', 16"' sind lösbar mit dem Dentalstrahlgerät verbunden. Jede Strahlguttankeinheit 16', 16", 16"', 16"" ist mittels einer Leitung 17', 17", 17"', 17"" mit einem Bearbeitungswerkzeug 14', 14", 14"', 14"" verbunden. Strahlgut, welches sich in den Strahlguttankeinheiten 16', 16", 16"', 16"" befindet, wird als Strahlgut-Luft-Gemisch über die entsprechende Leitung 17', 17", 17"', 17"" zu dem zugeordneten Bearbeitungswerkzeug 14', 14", 14"', 14"" in der Bearbeitungskammer 10 geführt. Die Strahlguttankeinheiten 16', 16", 16"', 16"" stehen im Betrieb unter einem Überdruck. Dieser Überdruck kann vom Bediener über eine Einstelleinheit 1 8 variiert und eingestellt werden. Mittels der Einstelleinheit 18 für den Überdruck in der für den Betrieb ausgewählten Strahlguttankeinheit 16', 16", 16"', 16"" kann eine Strahlenergie des Strahlgut-Luft-Gemischs, welches aus einer Düse des zugehörigen Bearbeitungswerkzeugs 14', 14", 14"', 14"" austritt, individuell eingestellt werden.

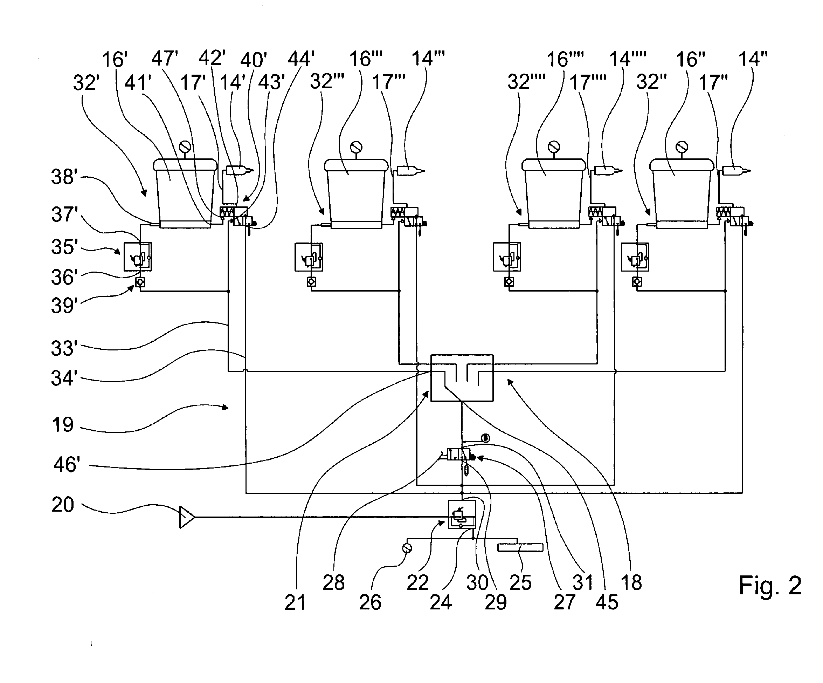

Zur Versorgung der Strahlguttankeinheiten 16', 16", 16"', 16"" mit Druckluft weist das Dentalstrahlgerät eine Dentalstrahlgerätevorrichtung mit einem Druckluftversorgungssystem 19 auf (vgl. Figur 2). Das Druckluftversorgungssystem 19 umfasst einen Versorgungsanschluss 20, der zum Anschluss an eine stationäre Druckluftversorgung vorgesehen ist. Die an den Versorgungsanschluss 20 anschließbare Druckluftversorgung ist für einen Eingangsdruck vorgesehen, der in einem statischen Zustand typischerweise in etwa 6 Bar beträgt. Grundsätzlich ist die Dentalstrahlgerätevorrichtung für einen maximalen Eingangsdruck von 8 Bar bis 10 Bar vorgesehen.

Zur Auswahl der für die Bearbeitung vorgesehenen Strahlguttankeinheit 16', 16", 16"', 16"" und des entsprechenden Bearbeitungswerkzeugs 14', 14", 14"', 14"" umfasst die Einstelleinheit 18 einen Auswahlschalter 21. Der Auswahlschalter 21 weist eine Anzahl von Stellungen auf, die einer Anzahl der Strahlguttankeinheiten 16', 16", 16"', 16"" entspricht. In dem dargestellten Ausführungsbeispiel umfasst das Dentalstrahlgerät vier Strahlguttankeinheiten 16', 16", 16"', 16"". Grundsätzlich ist aber auch eine Ausgestaltung mit einer anderen Anzahl, wie beispielsweise lediglich zwei Strahlguttankeinheiten, denkbar.

Weiter umfasst das Druckluftversorgungssystem 19 einen Eingangsdruckregler 22. Der Eingangsdruckregler 22 ist strömungstechnisch nach dem Versorgungsanschluss 20 angeordnet. Der Eingangsdruckregler 22 ist dazu vorgesehen, einen an dem Versorgungsanschluss anliegenden Eingangsdruck auf einen geräteinternen Versorgungsdruck einzuregeln. Der Eingangsdruckregler 22 ist einstellbar. Er weist ein Einstellelement 23 auf, über das der Bediener den geräteinternen Versorgungsdruck einstellen kann. Der Eingangsdruckregler 22 umfasst weiter einen Sekundärausgang 24, an den eine Ausblasdüse 25 angeschlossen ist. Zur Überwachung des geräteinternen Versorgungsdrucks umfasst der Eingangsdruckregler 22 ein Manometer 26, das den geräteinternen Versorgungsdruck anzeigt.

Weiter umfasst das Druckluftversorgungssystem 19 ein von dem Bediener betätigbares Schaltventil 27, das zur Aktivierung der Bearbeitungswerkzeuge 14', 1 4", 14"', 14""' vorgesehen ist. Das Schaltventil 27 ist mit einem Fußpedal 28 verbunden, das zur Aktivierung der Bearbeitungswerkzeuge 14', 14", 14"', 14"" von dem Bediener betätigt wird. Das Schaltventil 27 ist in dem Druckluftversorgungssystem 19 strömungstechnisch nach dem Eingangsdruckregler 22 und strömungstechnisch vor dem Auswahlschalter 21 angeordnet. Das Schaltventil 27 weist einen Eingang 29 auf, an dem der von dem Eingangsdruckregler 22 begrenzte geräteinterne Versorgungsdruck anliegt. Der Eingang 29 des Schaltventils 27 ist mit einem Ausgang 30 des Eingangsdruckreglers 22 verbunden. Ein Ausgang 31 des Schaltventils 27 ist direkt mit einem Eingang 45 des Auswahlschalters 21 verbunden.

Für die einzelnen Bearbeitungswerkzeuge 14', 14", 14"', 14"" weist das Druckluftversorgungssystem 19 jeweils einzelne Werkzeugversorgungssysteme 32', 32", 32"', 32"" auf. Die Werkzeugversorgungssysteme 32', 32", 32"', 32"" bilden jeweils einen Teil des Druckluftversorgungssystems 19 aus. Die Werkzeugversorgungssysteme 32', 32", 32"', 32"" sind alle analog ausgebildet, weshalb im Folgenden lediglich das Werkzeugversorgungssystem 32' beschrieben werden soll. Bezüglich einer Ausgestaltung der restlichen Werkzeugversorgungssysteme 32", 32"', 32"" kann auf die Beschreibung des Werkzeugversorgungssystems 32' verwiesen werden.

Das Werkzeugversorgungssystem 32' umfasst eine Versorgungsleitung 33' und eine Schaltventilleitung 34'. Die Versorgungsleitung 33' ist mit einem dem entsprechenden Bearbeitungsgerät 14' zugeordneten Ausgang 46' des Auswahlschalters 21 verbunden. Die Schaltventilleitung 34' ist direkt mit dem Ausgang 30 des Eingangsdruckreglers 22 verbunden.

Weiter umfasst das Werkzeugversorgungssystem 32' einen Druckregler 35' für einen Betriebsdruck, mit dem das Bearbeitungswerkzeug 14' betrieben werden soll. Der Druckregler 35' umfasst einen Eingang 36', der mit der Versorgungsleitung 33' verbunden ist, und einen Ausgang 37', der mit einem Eingang 38' der Strahlguttankeinheit 16' verbunden ist. Mittels des Druckreglers 35' ist der Betriebsdruck für die Strahlguttankeinheit 16' und das zugehörige Bearbeitungswerkzeug 14' individuell einstellbar. Zudem umfasst das Werkzeugversorgungssystem 32' ein Rückschlagventil 39', das strömungstechnisch vor dem Druckregler 35' angeordnet ist.

Ferner umfasst das Werkzeugversorgungssystem 32' ein Schaltventil 40', das ausgangsseitig der Strahlguttankeinheit 16' angeordnet ist. Die Strahlguttankeinheit 16' umfasst einen Ausgang 41', durch den das Strahlgut-Luft-Gemisch in einem Betrieb hinausbefördert wird. Das Schaltventil 40' umfasst einen Eingang 47', der mit dem Ausgang 41' der Strahlguttankeinheit 16' verbunden ist. Zudem umfasst das Schaltventil 40' einen Ausgang 42', an den das Bearbeitungswerkzeug 14' angebunden ist.

Ferner umfasst das Schaltventil 40' einen Schalteingang 43' und einen Rückstelleingang 44'. Der Schalteingang 43' ist ebenfalls mit dem Ausgang 46' des Auswahlschalters 21, der dem Bearbeitungswerkzeug 14' zugeordnet ist, verbunden. Über den Auswahlschalter 21 ist damit der Schalteingang 43' des Schaltventils 40' an dem Ausgang 31 des von dem Bediener betätigbaren Schaltventils 27 angebunden. Das Schaltventil 27 und das Schaltventil 40' sind damit wirkungsmäßig miteinander verbunden. Der Rückstelleingang 44' ist direkt mit der Schaltventilleitung 34' des Werkzeugversorgungssystems 32' verbunden. Der Rückstelleingang 44' ist damit über die Schaltventilleitung 34' mit dem Ausgang 30 des Eingangsdruckreglers 22 verbunden.

Das Schaltventil 40' ist als ein Quetschventil ausgeführt. Die Leitung 17', die den Ausgang 41' der Strahlguttankeinheit 16' mit dem Bearbeitungswerkzeug 14' verbindet, ist zumindest im Bereich des Schaltventils 40' als eine flexible Leitung ausgeführt. Das Schaltventil 40' weist einen Quetschkolben auf, der dazu vorgesehen ist, die Leitung 17' in diesem Bereich zusammenzudrücken und dadurch gasdicht zu verschließen. Grundsätzlich sind aber auch andere Ausgestaltungen des Schaltventils 40' denkbar.

Die flexible Leitung 17' stellt eine Rückstellkraft zum Öffnen des Schaltventils 40' bereit. In einem Betriebszustand, in dem an dem Schalteingang 43' und dem Rückstelleingang 44' des Schaltventils 40' der gleiche Druck anliegt, bewirkt die von der Leitung 17' ausgeübte Rückstellkraft ein Öffnen des Schaltventils 40'. Grundsätzlich ist aber auch eine andere Ausgestaltung des Schaltventils 40' denkbar, die eine wirkungsmäßige Anbindung an das Schaltventil 27 ermöglicht.

Für einen Betrieb des Dentalstrahlgeräts stellt der Bediener zunächst mittels des Eingangsdruckreglers 22 den gewünschten geräteinternen Versorgungsdruck ein. Der geräteinterne Versorgungsdruck wird dabei werkseitig einmalig eingestellt und braucht während des Betriebs des Dentalstrahlgeräts im Allgemeinen nicht verändert zu werden. Das Einstellelement 23 des Eingangsdruckreglers 22 ist daher fixiert, wodurch eine Verstellung durch den Bediener verhindert wird. Zur Verstellung des geräteinternen Versorgungsdrucks kann der Bediener die Fixierung jedoch lösen und anschließend das Einstellelement 23 verdrehen. Die Fixierung des Einstellelements 23 ist mittels einer axial in das Einstellelement 23 eingebrachten Schraube realisiert, die das Einstellelement 23, das zum Verstellen axial angehoben werden muss, axial fixiert. Für den Betrieb des Dentalstrahlgeräts wird dabei der geräteinterne Versorgungsdruck auf einen Wert eingestellt, der größer oder gleich groß ist wie der Betriebsdruck, mit dem das Bearbeitungswerkzeug 14' bzw. eines der anderen Bearbeitungswerkzeuge 14", 14"', 14"" betrieben werden soll. Typischerweise wird der geräteinterne Versorgungsdruck auf einen Wert von ca. 6 Bar eingestellt.

Für den Betrieb des Dentalstrahlgeräts betätigt der Bediener das Schaltventil 27. Dadurch wird der Eingang 45 des Auswahlschalters 21 mit dem Ausgang 30 des Eingangsdruckreglers 22 verbunden. Die Versorgungsleitung 33' des Werkzeugversorgungssystems 32' ist damit mit dem Ausgang 30 des Eingangsdruckreglers 22 verbunden. Durch die wirkungsmäßige Verbindung des Schaltventils 27 mit dem Schaltventil 40' wird das Schaltventil 40' geöffnet, wenn der Bediener das Schaltventil 27 betätigt. Sind die beiden Schaltventile 27, 40' geöffnet, strömt die Druckluft über das Druckluftversorgungssystem 19 durch die Strahlguttankeinheit 16' zu dem Bearbeitungswerkzeug 14'.

Die Druckluft strömt dabei über den Versorgungsanschluss 20 in das Dentalstrahlgerät ein. Der Eingangsdruck, mit dem die Druckluft in das Dentalstrahlgerät einströmt, wird anschließend in dem Eingangsdruckregler 22 auf den internen Versorgungsdruck reduziert. Anschließend strömt die Druckluft durch das im Betrieb geöffnete Schaltventil 27 und den Auswahlschalter 21. Weiter strömt die Druckluft durch das Rückschlagventil 39', den Druckregler 35' und die Strahlguttankeinheit 16'. Die Strahlguttankeinheit 16' weist eine Mischeinheit auf, in der das in der Strahlguttankeinheit 16' bevorratete Strahlgut der Druckluft beigemischt wird. Das Luft-Strahlgutgemisch strömt weiter über das Schaltventil 40' zu dem Bearbeitungswerkzeug 14', aus dessen Düse es anschließend austritt. Im Betrieb stellt sich damit in dem Druckluftversorgungssystem 19 des Dentalstrahlgeräts ein dynamisches Druckgefälle ein, bei dem ein Druck, ausgehend von dem Eingangsdruck, immer weiter reduziert wird, bis er in dem Druckregler 35' auf den vorgesehenen Betriebsdruck reduziert wird. Als Betriebsdruck wird dabei typischerweise ein Wert eingestellt, der zwischen 1 Bar und 6 Bar liegen kann. Der Bediener stellt dabei den Betriebsdruck in Abhängigkeit von der durchzuführenden Bearbeitung ein.

Den vorgesehenen Betriebsdruck stellt der Bediener während des Betriebs des Dentalstrahlgeräts ein. Dazu öffnet der Bediener mittels des Fußpedals 28 die beiden Schaltventile 27, 40' und regelt anschließend mittels des Druckreglers 35' den Betriebsdruck auf den vorgesehenen Wert ein. Zur Kontrolle und Einstellung des Betriebsdrucks weisen die Strahlguttankeinheiten 16', 16", 16"', 16"" jeweils ein Druckmanometer auf, das den Betriebsdruck anzeigt.

Durch Loslassen des Fußpedals 28 schließt der Bediener die beiden Schaltventile 27, 40'. Sobald der Bediener das Schaltventil 27 schließt, wird die Versorgungsleitung 33' des Werkzeugversorgungssystems 32' von dem Ausgang 30 des Eingangsdruckreglers 22 getrennt. Zum Zeitpunkt des Schließens des Schaltventils 27 ist das Schaltventil 40' noch geöffnet. Der Betriebsdruck, der an der Versorgungsleitung 33' anliegt, fällt dadurch zunächst ab.

Der Schalteingang 43' des Schaltventils 40' ist mit dem Ausgang 46' des Auswahlschalters 21 verbunden, während der Rückstelleingang 44' des Schaltventils 40' mit dem Ausgang 30 des Eingangsdruckreglers 22 verbunden ist. Mit dem Schließen des Schaltventils 27 entsteht somit zwischen dem Schalteingang 43' und dem Rückstelleingang 44' des Schaltventils 40' eine Druckdifferenz, aufgrund deren das Schaltventil 40' schließt. Das Schaltventil 27 und das Schaltventil 40' begrenzen damit einen Teil des Druckluftversorgungssystems 19, in dem insbesondere die Strahlguttankeinheit 16' und der Druckregler 35' des Werkzeugversorgungssystems 32' angeordnet sind.

Die beiden Schaltventile 27, 40' schließen dabei diesen Teil des Druckluftversörgungssystems 19 zumindest im Wesentlichen gasdicht ab. Nach dem Schließen des Schaltventils 40' weist dieser Teil des Druckluftversorgungssystems 19 zunächst einen statischen Druck auf, der im Wesentlichen durch die Druckdifferenz, bei der das Schaltventil 40' schließt, bestimmt ist.

Der Druckregler 35' ist dazu vorgesehen, den statischen Druck, der in geschlossenem Zustand in dem durch das Schaltventil 40' und das Schaltventil 27 begrenzten Teil herrscht, auf den vorgesehenen Betriebsdruck zu reduzieren. Der Druckregler 35' weist einen Sekundärausgang auf, durch den er bei einem Überschreiten des eingestellten Versorgungsdrucks überschüssige Druckluft abbläst. In einem deaktivierten Zustand, in dem die beiden Schaltventile 27, 40' geschlossen sind, herrscht somit insbesondere in der Strahlguttankeinheit 16' ein statischer Druck, der im Wesentlichen dem vorgesehenen und mittels des Druckregler 35' eingestellten dynamischen Betriebsdruck entspricht.

### Bezugszeichen

- 10: Bearbeitungskammer
- 11: Eingriffausnehmung
- 12: Eingriffausnehmung
- 13: Deckel
- 14: Bearbeitungswerkzeug
- 15: Boden
- 16: Strahlguttankeinheit
- 17: Leitung
- 18: Einstelleinheit
- 19: Druckluftversorgungssystem
- 20: Versorgungsanschluss
- 21: Auswahlschalter
- 22: Eingangsdruckregler
- 23: Einstellelement
- 24: Sekundärausgang
- 25: Ausblasdüse
- 26: Manometer
- 27: Schaltventil
- 28: Fußpedal
- 29: Eingang
- 30: Ausgang
- 31: Ausgang
- 32: Werkzeugversorgungssystem
- 33: Versorgungsleitung
- 34: Schaltventilleitung
- 35: Druckregler
- 36: Eingang
- 37: Ausgang
- 38: Eingang
- 39: Rückschlagventil
- 40: Schaltventil
- 41: Ausgang
- 42: Ausgang
- 43: Schalteingang
- 44: Rückstelleingang
- 45: Eingang
- 46: Ausgang
- 47: Eingang

## Patentansprüche

1. Dentalstrahlgerätevorrichtung mit einem Druckluftversorgungssystem (19), das zumindest ein erstes Schaltventil (27) aufweist, das für einen Betrieb von einem Bediener betätigbar ist,
**gekennzeichnet durch**
zumindest ein zweites Schaltventil (40'), das wirkungsmäßig mit dem von dem Bediener betätigbaren ersten Schaltventil (27) verbunden ist.

2. Dentalstrahlgerätevorrichtung nach Anspruch 1,
**gekennzeichnet durch**
einen Eingangsdruckregler (22), der einen Ausgang (30) aufweist, der in zumindest einem Betriebszustand mit einem Eingang (29) des ersten Schaltventils (27) und einem Rückstelleingang (44') des zweiten Schaltventils (40') strömungstechnisch verbunden ist.

3. Dentalstrahlgerätevorrichtung nach Anspruch 1 oder 2,
**dadurch gekennzeichnet, dass**
das erste Schaltventil (27) einen Ausgang (31) aufweist, der in zumindest einem Betriebszustand mit einem Schalteingang (43') des zweiten Schaltventils (40') strömungstechnisch verbunden ist.

4. Dentalstrahlgerätevorrichtung nach einem der vorhergehenden Ansprüche,
**dadurch gekennzeichnet, dass**
das zweite Schaltventil (40') einen Eingang (47') aufweist, der in zumindest einem Betriebszustand mit dem Ausgang (31) des ersten Schaltventils (27) strömungstechnisch verbunden ist.

5. Dentalstrahlgerätevorrichtung nach einem der vorhergehenden Ansprüche,
**gekennzeichnet durch**
zumindest einen Druckregler (35'), der strömungstechnisch zwischen den zumindest zwei Schaltventilen (27, 40') angeordnet ist.

6. Dentalstrahlgerätevorrichtung nach einem der vorhergehenden Ansprüche,
**gekennzeichnet durch**
zumindest eine Strahlguttankeinheit (16'), die strömungstechnisch zwischen den zumindest zwei Schaltventilen (27, 40') angeordnet ist.
